Europäisches Patentamt

European Patent Office

Office européen des brevets

(11) Veröffentlichungsnummer: **0 163 775**
**B1**

(12) # EUROPÄISCHE PATENTSCHRIFT

(45) Veröffentlichungstag der Patentschrift:
22.06.88

(51) Int. Cl.⁴: **G 06 F 9/44**, G 06 F 12/06

(21) Anmeldenummer: 84116279.5

(22) Anmeldetag: 24.12.84

(54) Steuervorrichtung für Funktionen im Kraftfahrzeug.

(30) Priorität: 25.05.84 DE 3419559

(43) Veröffentlichungstag der Anmeldung:
11.12.85 Patentblatt 85/50

(45) Bekanntmachung des Hinweises auf die Patenterteilung:
22.06.88 Patentblatt 88/25

(84) Benannte Vertragsstaaten:
AT DE FR GB IT SE

(56) Entgegenhaltungen:
DE - A - 2 923 427
DE - A - 3 200 626
DE - A - 3 210 616
FR - A - 2 427 646

E.D.N. ELECTRICAL DESIGN NEWS, Band 28, Nr. 21,
Seiten 177-188, Oktober 1983, Boston, Massachusetts,
US; A.J. MORALES et al.: "Adding EEPROM to ROM
expands IC versatility"
IBM TECHNICAL DISCLOSURE BULLETIN, Band 24,
Nr.1A, 17. Juni 1981, Seite 130, New York, US; L.
DOEHLE et al.: "Read-only store patch"
NEW ELECTRONICS, Band 17, Nr. 4, Februar 1984,
Seiten 29-33, London, GB; D. WINCH: "A modular
approach to 16000 software"

(73) Patentinhaber: ROBERT BOSCH GMBH, Postfach 50,
D-7000 Stuttgart 1 (DE)

(72) Erfinder: Przybyla, Bernd, Ing. grad., H. Essig
Strasse 104, D-7141 Schwieberdingen (DE)
Erfinder: Bruckelt, Alfred, Richard-Wagner-Strasse 13,
D-7141 Steinheim (DE)
Erfinder: Kirschner, Michael, Dipl.-Ing.,
Humboldtstrasse 57, D-7530 Pforzheim (DE)

## Beschreibung

### Stand der Technik

Die Erfindung geht aus von einer Steuervorrichtung nach der Gattung des Hauptanspruchs. Aus der DE-OS 32 00 626 bzw. der DE-OS 32 10 616 sind bereits mikrocomputergesteuerte Steuergeräte bekannt, die ein Hilfs-ROM aufweisen, mittels dem Daten zu ändern oder zu korrigieren sind, beispielsweise Daten, die sich in Abhängigkeit von dem Modell eines Kraftfahrzeuges ändern. Zum Erkennen des eingefügten Hilfs-ROMS wird dabei eine logische 1 zuvor während der Programmzusammenstellung in einer vorgegebenen Adresse des Hilfs-ROM gespeichert und diese Adresse vom Programm abgefragt. Das Hilfs-ROM dient nun zur Änderung einiger Inhaltswerte des Haupt-ROMs, so dass die gewünschte Anpassung erreicht wird. Durch die vorbekannten Steuereinrichtungen ist es zwar möglich, beispielsweise Kennlinien zu ändern, es ist jedoch nicht möglich, den gesamten Programmablauf umzustellen, da dieser durch das Haupt-ROM vorgegeben ist.

### Vorteile der Erfindung

Die erfindungsgemässe Steuervorrichtung mit den kennzeichnenden Merkmalen des Hauptanspruchs hat demgegenüber den Vorteil, dass nach der Einfügung des zusteckbaren Festwertspeichers die Funktionsabläufe in beliebiger Form änderbar sind und durch neue Funktionsabläufe ergänzt werden können. Dadurch wird eine höhere Flexibilität der gesamten Anordnung erreicht. So ist es beispielsweise möglich, die Ablauffolge der Zündsteuerung und der Getriebesteuerung untereinander zu vertauschen, oder es ist möglich, bereits vorhandene Funktionsabläufe zu aktivieren. Die neuen Funktionsabläufe können im zusteckbaren Festwertspeicher abgelegt sein und dienen zur Erweiterung der bereits vorhandenen Steuervorrichtung. Durch die erfindungsgemässe Steuervorrichtung ist es somit möglich, ein Grundmodell durch das Anfügen eines zusteckbaren Festwertspeichers auf verschiedenste mögliche Funktionen zu erweitern. Dadurch ist eine hohe Flexibilität der Steuervorrichtung gegeben, und Kundenwünsche sind leicht, teilweise kurz vor der Auslieferung des Kraftfahrzeuges, zu erfüllen.

Durch die in den Unteransprüchen aufgeführten Massnahmen sind vorteilhafte Weiterbildungen und Verbesserungen der im Hauptanspruch angegebenen Steuervorrichtung möglich. Besonders vorteilhaft ist es, in dem zusteckbaren Festwertspeicher eine Programmerweiterung dahingehend vorzusehen, dass Diagnoseabläufe steuerbar sind. Dadurch wird erreicht, dass in Abhängigkeit von den gewünschten Funktionen eine individuelle Diagnose erfolgt, die in kurzer Zeit durchzuführen ist und daher wenig Arbeitszeit des Rechners selbst beansprucht.

### Zeichnung

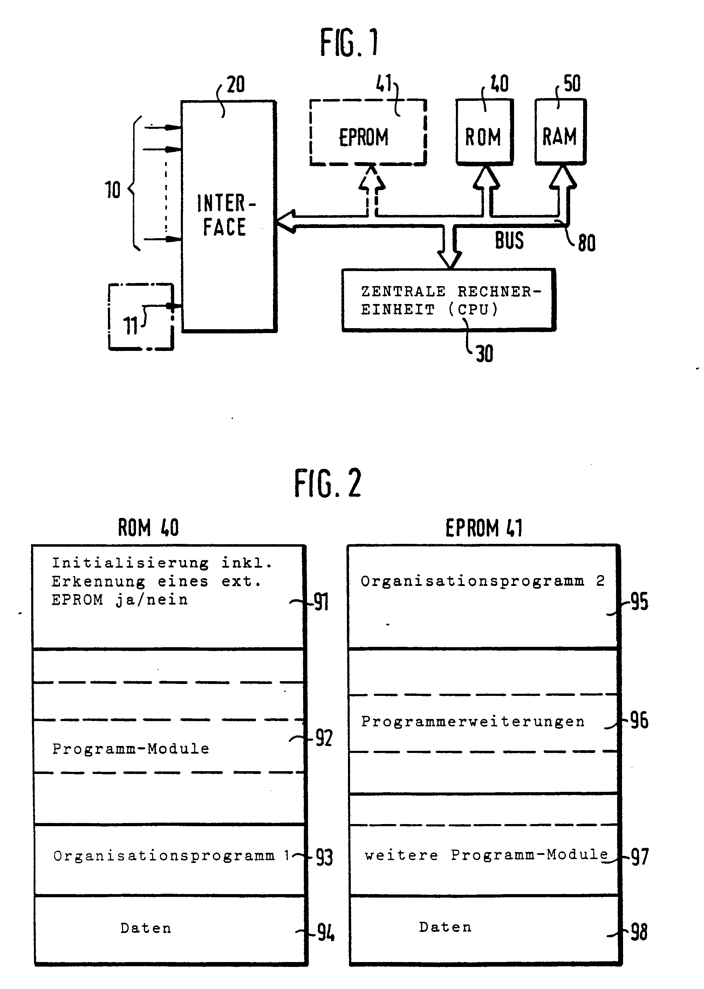

Ein Ausführungsbeispiel der Erfindung ist in der Zeichnung dargestellt und in der nachfolgenden Beschreibung näher erläutert. Es zeigen Figur 1 schematisch ein Steuergerät und Figur 2 die Organisation des Festwertspeichers und des zusteckbaren Festwertspeichers.

### Beschreibung des Ausführungsbeispiels

Die Figur 1 zeigt ein nach dem Stande der Technik aufgebautes Mikrocomputersystem, das als Steuervorrichtung für Funktionen in einem Kraftfahrzeug dient. Solche zu steuernde Funktionen sind beispielsweise die Zündung, die Einspritzung, die Lambda-Regelung, die Abgasrückführung, Überwachungsvorrichtungen wie Zündschlosskontrolle oder Gurtanlegekontrolle, Getriebesteuerungen oder Diagnosevorrichtungen. Die Steuervorrichtung umfasst eine Interface-Schaltung 20, die ein Zwischenglied zwischen den Eingangs- und Ausgangsschaltungen und den verschiedenen internen Computerschaltungen darstellt. Das Interface weist einen besonderen Eingang 11 auf, der so beschaltet ist, dass an ihm das Hinzufügen eines zusätzlichen Festwertspeichers ermittelt werden kann. Dies kann beispielsweise dadurch geschehen, dass ein Widerstand gegen Masse oder gegen die Versorgungsspannung geschaltet ist, der beispielsweise bereits im zusätzlichen Festwertspeicher enthalten sein kann. Dies stellt nur eine von vielen, jedoch eine besonders einfache Möglichkeit dar, um das Anschliessen eines zusätzlichen Festwertspeichers zu erkennen. Von der Interface-Schaltung 20 geht ein Datenbus 80 aus, der mit den weiteren Rechnerbausteinen in Verbindung steht. Angeschlossen ist eine zentrale Recheneinheit 30, die in der Lage ist, in Abhängigkeit von den in den Speichern festgelegten Programmschritten arithmetische logische Informationen entsprechend den vorprogrammierten Befehlen durchzuführen und die Ergebnisse auszugeben. Des weiteren ist ein Festwertspeicher 40 vorgesehen, der als ROM ausgebildet ist. Dieser Festwertspeicher enthält eine Serie von vorprogrammierten Befehlen, die modulartig abgelegt sind. Die dort gelagerten Befehle werden von der zentralen Recheneinheit 30 abgefragt. Des weiteren ist noch ein variabler Speicher 50 vorhanden, der als RAM ausgebildet ist. In diesem werden ständig veränderliche Daten eingelesen und zwischengespeichert. Schliesslich ist noch ein weiterer Festwertspeicher 41 steckbar, der als EPROM ausgebildet ist. Die Schaltung ist funktionsfähig, auch wenn dieses zusätzliche EPROM 41 nicht gesteckt ist.

Die Funktionsweise der Steuereinrichtung ist anhand der Darstellung in Figur 2 näher erläutert. Durch die zentrale Recheneinheit 30 wird beim Einschalten der Steuervorrichtung, beispielsweise beim Betätigen des Zündschlüssels eines Kraftfahrzeuges zuerst die Initialisierung durchgeführt. Hierbei werden die Register der zentralen Recheneinheit 30 und die Speicher des variablen Speichers 50 mit vorher festgelegten Werten belegt. Des weiteren werden über das Interface 20 die entsprechenden Verbindungsleitungen 10 geschaltet, die zu den verschiedenen Gebern und Aufnehmern im Kraftfahrzeug führen. Gleichzeitig

wird geprüft, ob an einem bestimmten Steckplatz der zusätzliche Festwertspeicher 41 eingesteckt ist. Ist dieser Programmabschnitt 91 beendet, so wird das zugehörige Organisationsprogramm aufgerufen. Für den Fall, dass erkannt worden ist, dass das EPROM 41 nicht gesteckt ist, wird das Organisationsprogramm 93 aufgerufen, das im ROM 40 abgelegt ist. Durch das Organisationsprogramm 93 werden nunmehr die Programm-Module 92 in vorgeschriebener Reihenfolge abgearbeitet. Die Programm-Module 92 enthalten Funktionsabläufe, die ständig in einer vorgegebenen Reihenfolge abgearbeitet werden. So wird beispielsweise in einem ersten Programm-Modul der Zündwinkel aufgrund der aktuellen Fahrzeugdaten berechnet, in einem zweiten Programm-Modul ist der Funktionsablauf für den Scheibenwischer und in einem dritten Programm-Modul wird die Abgasregelung vorgenommen. Durch das Organisationsprogramm 93 müssen nicht alle Programm-Module 92 aufgerufen werden. Es ist durchaus möglich, einzelne Programm-Module, die in einem bestimmten Anwendungsfall nicht gebraucht werden, zu überspringen oder ganz auszulassen. In einem weiteren Block 94 des ROMS 40 sind Daten abgelegt, die die Programm-Module 92 benötigen. Dies sind Festwerte, aufgrund derer beispielsweise der Zündwinkel bestimmt wird, in Abhängigkeit davon, ob eine 4-Zylinder-Brennkraftmaschine oder eine 6-Zylinder-Brennkraftmaschine mit der Steuervorrichtung gesteuert werden soll. Es handelt sich hierbei also um feste Daten, die durch die Konstruktion des Kraftfahrzeuges vorgegen sind und sich nicht mehr ändern. Diese Daten können beispielsweise auch ein komplettes Kennlinienfeld beinhalten, nach der die Steuerung einer bestimmten Brennkraftmaschine zu erfolgen hat.

Mit dieser Grundversion der Steuervorrichtung sind bereits eine Vielzahl von Fahrzeugen zu betreiben, so dass diese Steuervorrichtung in dieser Form bereits in Grossserie herstellbar ist. Im Laufe der Weiterentwicklung des Fahrzeuges werden jedoch häufig technische Daten der Brennkraftmaschine oder sonstige Eigenschaften des Kraftfahrzeuges geändert, die eine schnelle Anpassung der entsprechenden Steuervorrichtung erfordern. In diesem Falle wird der zusätzliche Festwertspeicher 41 eingesteckt, in dem diese Änderungen enthalten sind. Dadurch wird nicht nur eine Modifizierung und eine Änderung der gespeicherten Inhalte erreicht, sondern es werden auch die Reihenfolge des Aufrufs der Programm-Module geändert. Auch wenn sich der Fahrzeugtyp nicht ändert, sind für die Fahrzeuge unterschiedliche Optionen erhältlich, die in der Steuervorrichtung berücksichtigt sein müssen. So sind beispielsweise auf Kundenwunsch zusätzliche Eigenschaften in die Steuervorrichtung einbringbar. So kann beispielsweise der Funktionsablauf einer automatischen Sitzverstellung oder einer Klimaanlage zu ergänzen sein. Um nunmehr eine leichte Programmierung des zusätzlichen Festwertspeichers zu ermöglichen, ist dieser als EPROM ausgebildet, der gegebenenfalls in der Werkstatt selbst kurz vor Auslieferung des Fahrzeuges programmiert werden kann. Ebenso ist eine solche Programmierung des zusätzlichen Festwertspeichers im Herstellerwerk des Fahrzeuges möglich, beispielsweise weil kurzfristig eine neue Motorserie eingebaut werden soll.

Bei der Initialisierung durch die zentrale Rechnereinheit 30 wird nunmehr durch den vom ROM 40 abgerufenen Programmlauf 91 erkannt, dass ein EPROM 41 gesteckt ist. Die zentrale Rechnereinheit 30 ruft nunmehr nicht das Organisationsprogramm 93 im ROM 40 auf, sondern ein neues Organisationsprogramm 95, das im EPROM 41 gespeichert ist. Durch dieses Organisationsprogramm 95 ist es möglich, sowohl Programm-Module 92 im ROM 40 als auch weitere Programm-Module 97 im EPROM 41 aufzurufen. Zusätzlich ist es damit möglich, die Reihenfolge des Aufrufs der Programm-Module zu vertauschen. Beispielsweise ist es möglich, zuerst ein Programm-Modul der Module 97 aufzurufen, durch das die Einspritzung eines Fahrzeuges gesteuert wird, während danach auf eines der Programm-Module 92 zurückgeführt, durch die beispielsweise der Zündzeitpunkt ermittelt wird. Das Organisationsprogramm 95 des EPROMS 41 bietet daher die Möglichkeit, sowohl Funktionserweiterungen vorzunehmen als auch die Funktionsabläufe als solche umzustellen. Man erhält dadurch eine sehr hohe Flexibilität der Steuervorrichtung beispielsweise bei einer Serienänderung oder bei speziellen Kundenwünschen. Des weiteren sind im EPROM 41 Programmerweiterungen 96 vorgesehen. Solche Programmerweiterungen sind beispielsweise Ergänzungen von Programm-Modulen, die im ROM 40 untergebracht sind. Dadurch ist es möglich, beispielsweise eine bereits vorhandene Zündsteuerung zu verfeinern. Programmerweiterungen sind beispielsweise auch spezielle Diagnoseabläufe, die sich aufgrund der neuen Organisation des Ablaufes in der Steuervorrichtung ergeben. Das EPROM 41 enthält des weiteren Daten 98, auf die die weiteren Programm-Module 97 und über Programmerweiterungen 96 auch die Programm-Module 92 zurückgreifen können. Durch diese Massnahmen ist es möglich, nicht nur den neuen Programm-Modulen Festwerte vorzugeben, sondern auch über die Programmerweiterungen fest vorgegebene Kennlinien zu verändern. Wesentlich ist, dass bei dem Hinzufügen eines zusätzlichen Festwertspeichers 41 die gesamte Organisation der Funktionsabläufe von diesem Speicher vorgenommen wird, so dass die neuen Funktionsabläufe direkt an die Erfordernisse des Fahrzeugtyps anpassbar sind.

## Patentansprüche

1. Steuervorrichtung für Funktionen in einem Kraftfahrzeug mittels eines Rechenbausteines (30), mit einem Festwertspeicher (40) und einem variablen Speicher (50) und mit einem wahlweise zusteckbaren weiteren Festwertspeicher (41) zur Modifizierung von Daten oder Programmen, wobei durch den Rechenbaustein der zugesteckte Festwertspeicher erkannt wird, dadurch gekennzeichnet, dass die Funktionsabläufe modular im Festwertspeicher (40, 41) abgelegt sind und aufgrund eines ebenfalls im Festwertspeicher (40, 41) abgelegten Organisationsprogrammes (93, 95) abgearbeitet werden und dass bei der Anwesenheit des zusteckbaren Festwertspeichers (41) zur Abarbeitung der Funktionsabläufe das Organisationsprogramm (95) des zusteckbaren Festwertspeichers (41) verwendet wird.

2. Steuervorrichtung nach Anspruch 1, dadurch gekennzeichnet, dass im zusteckbaren Festwertspeicher (41) weitere Funktionsabläufe abgelegt sind.

3. Steuervorrichtung nach Anspruch 1 oder 2, dadurch gekennzeichnet, dass im zusteckbaren Festwertspeicher (41) Diagnoseabläufe abgelegt sind.

## Claims

1. Control apparatus for functions in a motor vehicle by means of an arithmetic module (30), having a fixed storage (40) and a variable storage (50) and having a selectively annexable further fixed storage (41) for the modification of data or programs, whereby the annexed fixed storage is detected by the arithmetic module, characterized in that the functional cycles are filed in modular fashion in the fixed storage (40, 41) and are processed on the basis of an organization program (93, 95) likewise filed in the fixed storage (40, 41) and that in the presence of the annexable fixed storage (41) the organisation program (95) of the annexable fixed storage (41) is used to process the funtional cycles.

2. Control apparatus according to Claim 1, characterized in that further functional cycles are filed in the annexable fixed storage (41).

3. Control apparatus according to Claim 1 or 2, characterized in that diagnostic cycles are filed in the annexable fixed storage (41).

## Revendications

1. Dispositif de commande de programme pour un véhicule à moteur au moyen d'un bloc fonctionnel de calcul (30), avec une mémoire de valeurs fixes (40) et une mémoire variable (50), et une autre mémoire de valeurs fixes (41) pouvant être connectée à volonté pour modifier des données ou des programmes, la mémoire de valeurs fixes ainsi connectée étant identifiée par le bloc fonctionnel de calcul, dispositif de commande caractérisé en ce que les déroulements des fonctions sont déposés sous forme modulaire dans la mémoire de valeurs fixes (40, 41) et sont traités sur la base d'un programme d'organisation (93, 95) également déposé dans la mémoire de valeurs fixes (40, 41) et que, lors de la présence de la mémoire de valeurs fixes (41) susceptible d'être connectée, la programme d'organisation de cette mémoire de valeurs fixes (41) susceptible d'être connectée est utilisé pour le traitement des déroulements de fonctions.

2. Dispositif de commande selon la revendication 1, caractérisé en ce que dans la mémoire de valeurs fixes susceptible d'être connectée (41), sont déposés d'autres déroulements de fonctions.

3. Dispositif de commande selon la revendication 1 ou 2, caractérisé en ce que des déroulements de diagnostics sont déposés dans la mémoire de valeurs fixes (41) susceptible d'être connectée.

# FIG. 1

# FIG. 2

## ROM 40

| |
|---|
| Initialisierung inkl. Erkennung eines ext. EPROM ja/nein ⌐91 |
| Programm-Module ⌐92 |
| Organisationsprogramm 1 ⌐93 |
| Daten ⌐94 |

## EPROM 41

| |
|---|
| Organisationsprogramm 2 ⌐95 |
| Programmerweiterungen ⌐96 |
| weitere Programm-Module ⌐97 |
| Daten ⌐98 |

5